# EUROPÄISCHE PATENTSCHRIFT

(11) **EP 3 513 364 B1**
(45) Veröffentlichungstag und Bekanntmachung des Hinweises auf die Patenterteilung: **15.03.2023**
(21) Anmeldenummer: 17748438.3
(22) Anmeldetag: 24.07.2017
(51) Int. Cl.: G06Q 10/08, B60P 3/00, G06Q 10/04, G06Q 50/30, G06Q 50/28

(54) **FAHRZEUG ZUM TRANSPORTIEREN EINES GEGENSTANDS UND VERFAHREN ZUM EINLAGERN EINES GEGENSTANDS IN EINEM FAHRZEUG**
VEHICLE FOR TRANSPORTING AN ITEM AND METHOD FOR STORING AN ITEM IN A VEHICLE
VÉHICULE POUR TRANSPORTER UN ARTICLE ET PROCÉDÉ POUR STOCKER UN ARTICLE DANS UN VÉHICULE

(30) Priorität: 16.09.2016 DE 102016217717
(43) Veröffentlichungstag der Anmeldung: 24.07.2019
(73) Patentinhaber: Volkswagen Aktiengesellschaft, 38440 Wolfsburg (DE)
(72) Erfinder: SCHÜTZ, Daniel, 38165 Lehre (DE); HEROLD, Stephan, 38106 Braunschweig (DE); CANIS, Daniel, 10435 Berlin (DE)
(86) Internationale Anmeldenummer: PCT/EP2017/068681
(87) Internationale Veröffentlichungsnummer: WO 2018/050334

(56) Entgegenhaltungen:
- EP-A1- 2 827 289
- CN-U- 203 511 437
- GB-A- 1 487 904
- GB-A- 2 523 892
- US-A- 4 249 853
- US-A- 5 794 416
- US-A1- 2016 221 768

## Beschreibung

Die vorliegende Erfindung bezieht sich allgemein auf ein Konzept zum Einlagern eines Gegenstands in einem Fahrzeug und insbesondere auf ein Fahrzeug zum Transportieren eines Gegenstands und ein Verfahren zum Einlagern eines Gegenstands in einem Fahrzeug.

Ein Paket wird häufig von einer Abholadresse zu einer Lieferadresse transportiert. Hierbei wird das Paket an der Abholadresse in ein erstes Transportfahrzeug eingeladen und häufig mittels des ersten Transportfahrzeugs zu einem Sammelpunkt, wie einem Lagerhaus, in Nähe der Abholadresse transportiert. An dem Sammelpunkt angekommen wird das Paket aus dem ersten Transportfahrzeug entladen und auf Basis der Lieferadresse einem zweiten Transportfahrzeug zugeordnet. Daraufhin wird das Paket in das zweite Transportfahrzeug eingeladen und häufig mittels des zweiten Transportfahrzeugs zu einem Verteilungspunkt, beispielsweise einem weiteren Lagerhaus, in Nähe der Lieferadresse transportiert. An dem Verteilungspunkt angekommen wird das Paket aus dem zweiten Transportfahrzeug entladen und auf Basis der Lieferadresse einem dritten Transportfahrzeug zugeordnet. Das Paket wird in das dritte Transportfahrzeug eingeladen und mittels des dritten Transportfahrzeugs zu der Lieferadresse transportiert. Die hierbei anfallenden Be- und Entladevorgänge werden häufig zeitaufwändig und kostenintensiv durch die Fahrer der jeweiligen Transportfahrzeuge durchgeführt.

Die Druckschrift DE 10 2014 106 689 A1 betrifft ein Verfahren zum Abliefern und/oder Abholen einer Sendung. Hierbei weist das Fahrzeug eine Übergabeeinrichtung zum Einbringen einer Sendung in einen Aufnahmebehälter und/oder zum Verbringen einer Sendung aus dem Aufnahmebehälter in das Fahrzeug auf.

Die Druckschrift US 4,249,853 A betrifft eine Vorrichtung zum Beladen und Entladen eines Fahrzeugs. Die Vorrichtung weist eine schwenkbare Hebeeinrichtung auf.

Weiterhin betrifft die Druckschrift US 5 794 416 A ein computergesteuertes System für das Einladen von Paletten in einen begrenzten Lagerraum. Dabei können einzelne Paletten bei Bedarf umsortiert werden, um den begrenzten Lagerraum besser auszufüllen.

Die Druckschrift US 2016/0221768 A1 betrifft das automatische Beladen und Entladen eines Fahrzeugs. Ein automatisches Be- und Entladesystem innerhalb des Fahrzeugs ermöglicht eine Einlagerung von Gegenständen in einzelne Lagerabteile des Fahrzeugs.

In der Druckschrift EP 2 827 289 A1 wird ferner ein Konzept zur dynamischen Routenplanung für z.B. die Abholung und Auslieferung von Sachgütern vorgeschlagen.

Vor diesem Hintergrund wäre es wünschenswert, ein effizientes und kostengünstiges Konzept zum Einlagern eines Gegenstands in einem Fahrzeug zu schaffen.

Diesem Bedarf tragen ein Fahrzeug und ein Verfahren mit den Merkmalen der unabhängigen Patentansprüche Rechnung. Weitere vorteilhafte Ausführungsformen und Weiterbildungen sind Gegenstand der abhängigen Patentansprüche.

Gemäß einem ersten Aspekt schaffen Ausführungsbeispiele ein Fahrzeug zum Transportieren eines Gegenstands. Das Fahrzeug weist eine Lagereinrichtung mit einer Mehrzahl von Lagerpositionen für Gegenstände auf. Zudem weist das Fahrzeug eine Aufnahmeeinrichtung zum Einbringen des Gegenstands in das Fahrzeug auf. Das Fahrzeug weist ferner eine Erfassungseinrichtung zum Erfassen einer Information bezüglich des eingebrachten Gegenstands auf. Zudem weist das Fahrzeug eine Steuereinrichtung auf, welche ausgebildet ist, auf Basis der erfassten Information eine Lagerposition aus der Mehrzahl der Lagerpositionen auszuwählen. Die Steuereinrichtung ist ferner ausgebildet, ein Steuersignal, welches zu der ausgewählten Lagerposition korrespondiert, zu erzeugen. Zudem ist die Steuereinrichtung ausgebildet, das erzeugte Steuersignal über ein Kommunikationsnetzwerk auszusenden. Das Fahrzeug weist ferner eine Transporteinrichtung auf, welche ausgebildet ist, ansprechend auf das Steuersignal den eingebrachten Gegenstand zu der ausgewählten Lagerposition zu transportieren. Durch das Auswählen der Lagerposition für den Gegenstand kann erreicht werden, dass eine Belegung der Lagerpositionen mit Gegenständen optimiert werden kann.

Das Fahrzeug kann ein Kraftfahrzeug, wie ein Personenkraftwagen oder ein Lastkraftwagen, sein. Ferner kann das Fahrzeug ein Zustellfahrzeug, ein Lieferfahrzeug oder ein Auslieferfahrzeug sein. Die Lagereinrichtung des Fahrzeugs kann ein Regalsystem mit durch Regalfächern gebildeten Lagerpositionen umfassen. Hierbei können die Regalfächer über eine oder mehrere Ebenen des Regalsystems verteilt sein. Ferner können die Regalfächer unterschiedliche geometrische Abmessungen zum Lagern von Gegenständen mit unterschiedlicher Größe aufweisen. Beispielsweise liegt die Mehrzahl der Lagerpositionen im Bereich 2 bis 100, 5 bis 80, 15 bis 60 oder 20 bis 50.

Der Gegenstand kann ein Paket, eine Warensendung oder ein Brief sein. Ferner kann die Information bezüglich des Gegenstands eine dem Gegenstand zugeordnete Lieferadresse, eine geometrische Abmessung des Gegenstands oder ein Gewichtswert des Gegenstands sein. Beispielsweise ist die Information in einem Adressaufkleber gespeichert, welcher auf eine Oberfläche des Gegenstands aufgeklebt ist.

Die Steuereinrichtung kann einen Speicher aufweisen, in welchem eine Belegung der Lagerpositionen gespeichert ist. Beispielsweise ist die Belegung der Lagerpositionen in Form einer Datenbank in dem Speicher gespeichert. Ferner kann die Steuereinrichtung einen Prozessor aufweisen, welcher ausgebildet ist, eine Liste mit nicht belegten Lagerpositionen aus dem Speicher auszulesen und auf Basis der erfassten Information aus der ausgelesenen Liste eine Lagerposition auszuwählen. Beispielsweise wählt der Prozessor die Lagerposition derart aus, dass eingebrachte Gegenstände nach den diesen zugeordneten Lieferadressen, nach einer Priorität einer Umladung, nach ihrer Größe oder nach ihrem Gewicht sortiert und eingeordnet werden. Zudem kann der Prozessor ausgebildet sein, das Steuersignal zu erzeugen. Hierbei kann das Steuersignal ein digitales oder analoges Signal sein. Beispielsweise weist jede der Lagerpositionen eine individuelle Kennung auf und umfasst das Steuersignal die individuelle Kennung der ausgewählten Lagerposition. Ferner kann die Steuereinrichtung eine Kommunikationsschnittstelle zum Aussenden des Steuersignals über das Kommunikationsnetzwerk aufweisen. Die Kommunikationsschnittstelle kann einen Modulator zum Modulieren des Steuersignals auf ein Trägersignal aufweisen, um ein moduliertes Signal zu erhalten. Ferner kann die Kommunikationsschnittstelle einen Verstärker zum Verstärken des modulierten Signals umfassen. Zudem kann die Kommunikationsschnittstelle einen Ausgang zum Ausgeben des verstärkten Signals aufweisen. Beispielsweise ist die Kommunikationsschnittstelle eine serielle Schnittstelle, wie eine Universal Asynchronous Receiver Transmitter (UART) Schnittstelle, eine Serial Peripheral Interface (SPI) Schnittstelle, eine Inter-Integrated Circuit (I²C) Schnittstelle oder eine Controller Area Network Bus (CAN-Bus) Schnittstelle, und ist das Kommunikationsnetzwerk ein serielles Kommunikationsnetzwerk.

Die Transporteinrichtung kann eine Kommunikationsschnittstelle zum Empfangen des Steuersignals aufweisen. Die Kommunikationsschnittstelle kann einen Eingang zum Empfangen des von der Kommunikationsschnittstelle der Steuereinrichtung ausgesendeten verstärkten Signals aufweisen. Ferner kann die Kommunikationsschnittstelle ein Filter, beispielsweise ein Bandpassfilter, aufweisen, um unerwünschte Frequenzbereiche in dem empfangenen Signal zu unterdrücken und um ein gefiltertes Signal zu erhalten. Die Kommunikationsschnittstelle kann ferner einen Demodulator aufweisen, um ein Modulationssignal aus dem gefilterten Signal zurückzugewinnen. Ferner kann die Kommunikationsschnittstelle einen Prozessor oder einen Analog-/Digital-Wandler zum Extrahieren des Steuersignals aus dem zurückgewonnenen Modulationssignal aufweisen. Beispielsweise ist die Kommunikationsschnittstelle eine serielle Schnittstelle, wie eine Universal Asynchronous Receiver Transmitter (UART) Schnittstelle, eine Serial Peripheral Interface (SPI) Schnittstelle, eine Inter-Integrated Circuit (I²C) Schnittstelle oder eine Controller Area Network Bus (CAN-Bus) Schnittstelle.

Zudem kann die Transporteinrichtung eine Auflage aufweisen, auf welche der Gegenstand beim Einbringen über die Aufnahmeeinrichtung aufgelegt wird. Ferner kann die Transporteinrichtung einen oder mehrere Motoren, insbesondere einen oder mehrere Elektromotoren, und/oder ein Getriebe zum vertikalen und/oder horizontalen Bewegen der Auflage aufweisen. Die Transporteinrichtung kann ferner einen Prozessor oder einen Kontroller zum Steuern des Motors oder der Motoren aufweisen. Der Prozessor oder der Kontroller kann ausgebildet sein, den oder die Motoren derart zu steuern, dass die Auflage von der Aufnahmeeinrichtung zu der ausgewählten Lagerposition bewegen werden kann. Ferner kann die Auflage an der ausgewählten Lagerposition abgestellt werden oder kann der Gegenstand, beispielsweise mittels eines Schiebers, von der Auflage auf die ausgewählte Lagerposition bewegt werden.

Erfindungsgemäß weist die Aufnahmeeinrichtung eine Aufnahmeöffnung und ein schwenkbares Transportelement zum Transport von Gegenständen auf. Das schwenkbare Transportelement ist zwischen einer ersten Position, in welcher die Aufnahmeöffnung durch das schwenkbare Transportelement verschlossen ist, und einer zweiten Position, in welcher die Aufnahmeöffnung geöffnet ist, verschwenkbar. Dadurch kann die Aufnahmeeinrichtung besonders platzsparend in eine Wandung des Fahrzeugs integriert werden. Die Aufnahmeeinrichtung kann ferner einen Motor, insbesondere einen Elektromotor, zum Verschwenken des schwenkbaren Transportelements aufweisen. Ferner kann die Aufnahmeeinrichtung einen Prozessor oder einen Kontroller zum Steuern des Motors aufweisen.

Bei einigen Ausführungsbeispielen umfasst das schwenkbare Transportelement der Aufnahmeeinrichtung ein Rollenband, eine Rutsche, ein Transportband oder eine Rampe.

Dadurch kann die Aufnahmeeinrichtung und dadurch das Fahrzeug besonders kostengünstig hergestellt werden.

Bei einigen Ausführungsbeispielen weist die Aufnahmeeinrichtung ein Bremselement zum Abbremsen des über die Aufnahmeeinrichtung eingebrachten Gegenstands auf. Dadurch kann eine Beschädigung des Gegenstands beim Einbringen über die Aufnahmeeinrichtung vermieden werden.

Bei manchen Ausführungsbeispielen umfasst das Bremselement einen Kunststoffstreifen, ein Schaumelement oder ein Netz. Dadurch kann das Bremselement besonders kostengünstig bereitgestellt werden. Das Schaumelement kann einen nachgiebigen Schaum umfassen oder bilden.

Bei einigen Ausführungsbeispielen weist die Aufnahmeeinrichtung ein Toleranzkompensationselement zur Kompensation von Toleranzen bei dem Einbringen des Gegenstands auf. Dadurch kann das Einbringen des Gegenstands in das Fahrzeug erleichtert werden.

Bei manchen Ausführungsbeispielen ist das Toleranzkompensationselement ein Trichter, eine seitliche Wandung an einem Rollenband, ein Auffangrollenband mit seitlichen Wänden oder eine große Öffnung. Dadurch kann das Toleranzkompensationselement besonders kostengünstig bereitgestellt werden.

Bei einigen Ausführungsbeispielen weist das Fahrzeug eine Ausgabeeinrichtung zum Ausgeben des eingebrachten Gegenstands aus dem Fahrzeug auf. Ferner ist die Transporteinrichtung ausgebildet, den eingebrachten Gegenstand zu der Ausgabeeinrichtung zu transportieren. Dadurch kann der eingebrachte Gegenstand effizient aus dem Fahrzeug entladen werden.

Bei manchen Ausführungsbeispielen weist die Ausgabeeinrichtung eine Ausgabeöffnung und ein schwenkbares Transportelement der Ausgabeeinrichtung zum Transport von Gegenständen auf. Das schwenkbare Transportelement ist zwischen einer ersten Position, in welcher die Ausgabeöffnung durch das schwenkbare Transportelement verschlossen ist, und einer zweiten Position, in welcher die Ausgabeöffnung geöffnet ist, verschwenkbar. Dadurch kann die Ausgabeeinrichtung besonders platzsparend in eine Wandung des Fahrzeugs integriert werden. Die Ausgabeeinrichtung kann ferner einen Motor, insbesondere einen Elektromotor, zum Verschwenken des schwenkbaren Transportelements aufweisen. Ferner kann die Ausgabeeinrichtung einen Prozessor oder einen Kontroller zum Steuern des Motors aufweisen.

Bei einigen Ausführungsbeispielen umfasst das schwenkbare Transportelement ein Rollenband, eine Rutsche, ein Transportband oder eine Rampe. Dadurch kann die Ausgabeeinrichtung und dadurch das Fahrzeug besonders kostengünstig hergestellt werden.

Bei manchen Ausführungsbeispielen ist die Ausgabeeinrichtung durch eine Verbindungsstelle zu einem zweiten Fahrzeug, eine Koppelstelle zu einem zweiten Fahrzeug, einen translatorischen Schieber, einen rotatorischen Schieber, einen Kran, einen Kippmechanismus oder einen Schwenkmechanismus gebildet. Dadurch kann der Gegenstand besonders effizient ausgegeben oder an das zweite Fahrzeug übergeben werden. Das zweite Fahrzeug kann wie das erfindungsgemäße Fahrzeug ausgebildet sein.

Bei einigen Ausführungsbeispielen ist der Gegenstand ein Paket, eine Warensendung, ein Brief oder ein weiteres Fahrzeug. Das weitere Fahrzeug weist einen Aufnahmeraum auf, in welchem ein Paket, eine Warensendung oder ein Brief aufgenommen ist.

Bei manchen Ausführungsbeispielen weist der eingebrachte Gegenstand einen optischen Kode, in welchem die Information bezüglich des eingebrachten Gegenstands gespeichert ist, auf. Ferner weist die Erfassungseinrichtung einen optischen Sensor zum Erfassen des optischen Kodes und einen Prozessor zum Extrahieren der Information bezüglich des eingebrachten Gegenstands aus dem erfassten optischen Kode auf. Dadurch kann die Information besonders effizient erfasst werden. Der optische Kode kann auf den Gegenstand aufgedruckt oder mittels eines Aufklebers an dem Gegenstand angebracht sein. Zudem kann der optische Kode ein eindimensionaler Strichkode, wie ein Barcode, oder ein zweidimensionaler Strichkode, wie ein Quick Response (QR) Code, ein DataMatrix Code, ein MaxiCode oder ein Aztec-Code, sein, in welchem die Information kodiert gespeichert ist. Ferner kann der optische Kode durch einen maschinenlesbaren Bereich gebildet sein, welcher die Information beinhaltet. Der optische Sensor kann ein eindimensionaler oder ein zweidimensionaler Charge-Coupled Device (CCD) Sensor oder ein Bayer-Sensor sein. Ferner kann der optische Sensor ausgebildet sein, Licht im sichtbaren Wellenlängenbereich, im Infrarotwellenlängenbereich und/oder im Ultraviolettwellenlängenbereich zu erfassen. Zudem kann der optische Sensor ein Element einer Bildkamera der Erfassungseinrichtung sein. Die Bildkamera kann ferner ein Linsensystem zum Fokussieren auf den optischen Kode sowie ein optisches Filter zum Filtern von Störlicht aufweisen. Ferner kann die Erfassungseinrichtung eine Lichtquelle, wie eine lichtemittierende Diode (LED), zum Beleuchten des optischen Kodes aufweisen.

Bei einigen Ausführungsbeispielen weist die Erfassungseinrichtung eine drahtlose Kommunikationsschnittstelle zum Erfassen eines über ein drahtloses Kommunikationsnetzwerk ausgesendeten Kommunikationssignals auf, welches die Information bezüglich des eingebrachten Gegenstands umfasst. Ferner weist die Erfassungseinrichtung einen Prozessor zum Extrahieren der Information bezüglich des eingebrachten Gegenstands aus dem empfangenen Kommunikationssignals auf. Dadurch kann die Information auch bei einer Verschmutzung des Gegenstands effizient erfasst werden. Die drahtlose Kommunikationsschnittstelle kann eine Antenne zum Empfangen des ausgesendeten Kommunikationssignals aufweisen. Ferner kann die drahtlose Kommunikationsschnittstelle ein Filter, beispielsweise ein Bandpassfilter, aufweisen, um unerwünschte Frequenzbereiche in dem empfangenen Kommunikationssignal zu unterdrücken, und um ein gefiltertes Kommunikationssignal zu erhalten. Die drahtlose Kommunikationsschnittstelle kann ferner einen Demodulator aufweisen, um ein Modulationssignal aus dem gefilterten Kommunikationssignal zurückzugewinnen. Ferner kann der Prozessor zum Extrahieren der Information aus dem zurückgewonnenen Modulationssignal ausgebildet sein. Hierzu kann der Prozessor einen Analog-/Digital-Wandler aufweisen. Beispielsweise ist die drahtlose Kommunikationsschnittstelle zur Kommunikation über Nahfeldkommunikation (engl. Near-Field-Communication, NFC), zur Kommunikation über Radiofrequenzidentifikation (engl. Radio-Frequency Identification, RFID), zur Kommunikation gemäß einem Wireless Local Area Network (WLAN) Protokoll, zur Kommunikation gemäß einem Car-to-Car Communication (Car2Car) Protokoll oder zur Kommunikation gemäß einem Car-to-X Communication (Car2X) Protokoll ausgebildet und ist das drahtlose Kommunikationsnetzwerk ein NFC-Kommunikationsnetzwerk, ein RFID-Kommunikationsnetzwerk, ein WLAN-Kommunikationsnetzwerk, ein Car2Car-Kommunikationsnetzwerk oder ein Car2X-Kommunikationsnetzwerk. Bei manchen Ausführungsbeispielen kann der Gegenstand einen Transponder zur Kommunikation über RFID oder NFC aufweisen. Der Transponder kann eine Antenne, eine Transceiverschaltung zum Senden und Empfangen von Kommunikationssignalen, einen Speicher und einen Prozessor aufweisen. Hierbei kann die Information bezüglich des Gegenstands in dem Speicher vorgespeichert sein und kann der Prozessor ausgebildet sein, die Information aus dem Speicher auszulesen und ein Kommunikationssignal auf Basis der ausgelesenen Information zu erzeugen. Bei einigen Ausführungsbeispielen kann die Information mittels einer drahtlosen Kommunikationsschnittstelle eines zweiten Fahrzeugs ausgesendet werden. Beispielsweise sendet das zweite Fahrzeug das Kommunikationssignal bei einem Übergeben des Gegenstands von dem zweiten Fahrzeug zu dem Fahrzeug aus. Die drahtlose Kommunikationsschnittstelle des zweiten Fahrzeugs kann einen Prozessor aufweisen, welcher ausgebildet ist, auf Basis der Information bezüglich des Gegenstands ein Signal zu erzeugen. Ferner kann die drahtlose Kommunikationsschnittstelle des zweiten Fahrzeugs einen Modulator aufweisen, welcher ausgebildet ist, das erzeugte Signal auf ein Trägersignal zu modulieren, um das Kommunikationssignal zu erhalten. Die drahtlose Kommunikationsschnittstelle des zweiten Fahrzeugs kann ferner einen Verstärker zum Verstärken des Kommunikationssignals sowie eine Antenne zum Aussenden des verstärkten Kommunikationssignals aufweisen.

Bei manchen Ausführungsbeispielen umfasst die Information bezüglich des eingebrachten Gegenstands eine dem eingebrachten Gegenstand zugeordnete Lieferadresse, eine geometrische Abmessung des eingebrachten Gegenstands oder einen Gewichtswert des eingebrachten Gegenstands. Dadurch kann der Gegenstand effizient in der Lagereinrichtung einsortiert werden. Die Erfassungseinrichtung kann ausgebildet sein, die geometrische Abmessung des eingebrachten Gegenstands mittels der oben beschriebenen Bildkamera zu erfassen. Ferner kann die Einführeinrichtung eine Waage zum Erfassen des Gewichtswerts des eingebrachten Gegenstands aufweisen.

Gemäß einem zweiten Aspekt schaffen Ausführungsbeispiele ein Verfahren zum Einlagern eines Gegenstands in einem Fahrzeug. Das Fahrzeug weist eine Lagereinrichtung mit einer Mehrzahl von Lagerpositionen für Gegenstände und eine Transporteinrichtung zum Transportieren des Gegenstands zu den Lagerpositionen auf. Das Verfahren umfasst ein Einbringen des Gegenstands in das Fahrzeug mittels einer Aufnahmeeinrichtung des Fahrzeugs. Zudem umfasst das Verfahren ein Erfassen, durch eine Erfassungseinrichtung des Fahrzeugs, einer Information bezüglich des eingebrachten Gegenstands. Das Verfahren umfasst ferner ein Auswählen, mittels einer Steuereinrichtung des Fahrzeugs, einer Lagerposition aus der Mehrzahl der Lagerpositionen auf Basis der empfangenen Information. Zudem umfasst das Verfahren ein Erzeugen, mittels der Steuereinrichtung des Fahrzeugs, eines Steuersignals, welches zu der ausgewählten Lagerposition korrespondiert. Das Verfahren umfasst ferner ein Aussenden, mittels der Steuereinrichtung des Fahrzeugs, des erzeugten Steuersignals über ein Kommunikationsnetzwerk. Des Weiteren umfasst das Verfahren ein Transportieren, mittels der Transporteinrichtung, des eingebrachten Gegenstands zu der ausgewählten Lagerposition ansprechend auf das Steuersignals. Durch das Auswählen der Lagerposition für den Gegenstand kann erreicht werden, dass eine Belegung der Lagerpositionen mit Gegenständen optimiert werden kann.

Das Verfahren kann mittels des erfindungsgemäßen Fahrzeugs durchgeführt werden. Weitere Merkmale des Verfahrens ergeben sich unmittelbar aus der Funktionalität des erfindungsgemäßen Fahrzeugs.

Einige beispielhafte Ausführungsbeispiele der vorliegenden Erfindung werden nachfolgend bezugnehmend auf die beiliegenden Figuren näher erläutert. Es zeigen:
- Fig. 1: eine schematische Darstellung eines Transportsystems gemäß einem Ausführungsbeispiel;
- Fig. 2: eine schematische Darstellung des Transportsystems gemäß einem weiteren Ausführungsbeispiel;
- Fig. 3: eine schematische Darstellung eines Austausches von Gegenständen zwischen zwei Fahrzeugen gemäß einem Ausführungsbeispiel;
- Fig. 4.: eine schematische Darstellung eines Fahrzeugs gemäß einem Ausführungsbeispiel;
- Fig. 5: eine schematische Darstellung einer Anordnung zur Übergabe eines Gegenstands von einem ersten Fahrzeug zu einem zweiten Fahrzeug gemäß einem Ausführungsbeispiel;
- Fig. 6: eine schematische Darstellung eines Fahrzeugs gemäß einem weiteren Ausführungsbeispiel;
- Fig. 7: eine schematische Darstellung einer Anordnung zur Übergabe eines Gegenstands von einem ersten Fahrzeug zu einem zweiten Fahrzeug gemäß einem weiteren Ausführungsbeispiel;
- Fig. 8: eine schematische Darstellung einer Anordnung zur Übergabe eines Gegenstands von dem zweiten Fahrzeug zu dem ersten Fahrzeug gemäß dem in der Fig. 7 dargestellten Ausführungsbeispiel;
- Figs. 9a-b: perspektivische Ansichten eines Fahrzeugs gemäß einem weiteren Ausführungsbeispiel;
- Fig. 10: eine Anordnung mit einer Mehrzahl von Fahrzeugen gemäß dem in den Figs. 9a-b gezeigten Ausführungsbeispiel;
- Fig. 11: eine schematische Darstellung eines weiteren Fahrzeugs gemäß einem Ausführungsbeispiel;
- Fig. 12: eine schematische Darstellung einer Anordnung zum Umladen von Sendungen unter Verwendung des in Fig. 11 gezeigten weiteren Fahrzeugs gemäß einem Ausführungsbeispiel;
- Fig. 13: eine schematische Darstellung einer Anordnung zur Auslieferung von Sendungen von einem Fahrzeug zu Lieferpunkten; und
- Fig. 14: ein schematisches Diagramm eines Verfahrens zum Einlagern eines Gegenstands in einem Fahrzeug gemäß einem Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die Ausführungsbeispiele zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "gekoppelt" bezeichnet wird, mit dem anderen Element direkt verbunden oder gekoppelt sein kann oder dass dazwischenliegende Elemente vorhanden sein können. Wenn ein Element dagegen als "direkt verbunden" oder "direkt gekoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer", " eine", "eines" und "der", "die", "das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist" und/oder "aufweisend", "umfasst" und/oder "umfassend" wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

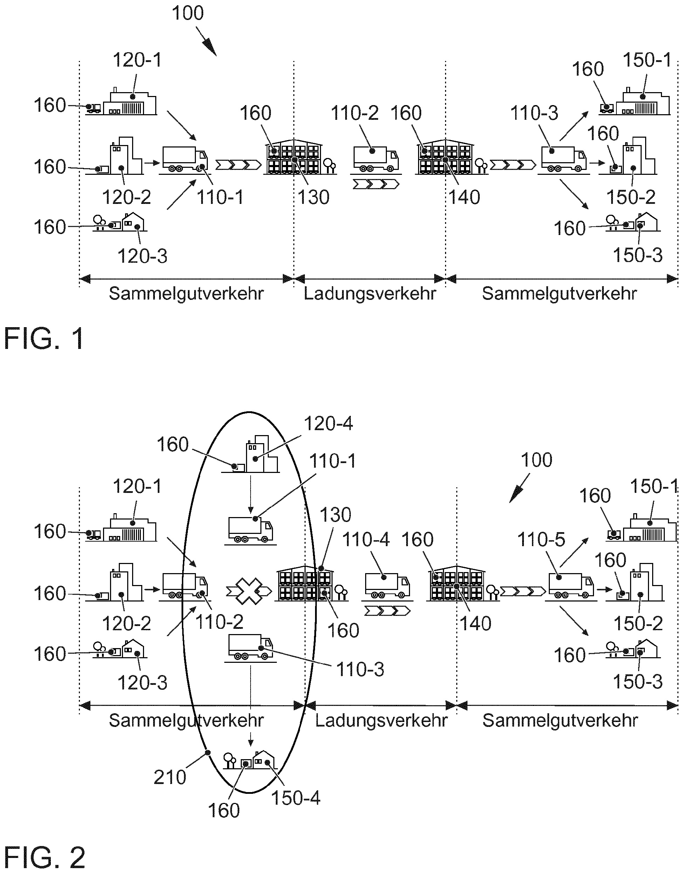

Fig. 1 zeigt eine schematische Darstellung eines Transportsystems 100 gemäß einem Ausführungsbeispiel, in welchem die vorliegende Erfindung angewendet werden kann. Das Transportsystem 100 umfasst drei Fahrzeuge 110, drei Abholpunkte 120, einen Sammelpunkt 130, einen Verteilungspunkt 140 und drei Lieferpunkte 150. In dem Transportsystem 100 werden Gegenstände 160, wie Pakete, Warensendungen oder Briefe, an den Abholpunkten 120 in ein erstes Fahrzeug 110-1 eingeladen und zu einem Sammelpunkt 130 transportiert. Hierbei können die Abholpunkte 120 in der Nähe eines Produktionsbetriebs, wie einer Fabrik, eines Bürogebäudes, eines Wohnblocks oder eines Wohnhauses liegen. Ferner kann der Sammelpunkt 130 ein Lagerhaus sein. Des Weiteren wird der Transport der Gegenstände 160 von den Abholstationen 120 mittels des ersten Fahrzeugs 110-1 häufig als Sammelgutverkehr bezeichnet.

An dem Sammelpunkt 130 werden die Gegenstände 160 aus dem ersten Fahrzeug 110-1 ausgeladen und nach den zughörigen Lieferpunkten 150, beispielsweise nach den Lieferadressen, sortiert und in ein zweites Fahrzeug 110-2 eingeladen. Im Anschluss daran werden die Gegenstände 160 mittels des zweiten Fahrzeugs 110-2 zu dem Verteilungspunkt 140 transportiert. Hierbei kann der Verteilungspunkt 140 ein Lagerhaus sein. Ferner wird der Transport der Gegenstände 160 zu dem Verteilungspunkt 140 mittels des zweiten Fahrzeugs 110-2 häufig als Ladungsverkehr bezeichnet.

An dem Verteilungspunkt 140 werden die Gegenstände 160 aus dem zweiten Fahrzeug 110-2 ausgeladen und erneut nach den zughörigen Lieferpunkten 150, beispielsweise nach den Lieferadressen, sortiert und in ein drittes Fahrzeug 110-3 verladen. Im Anschluss daran werden die Gegenstände 160 mittels des dritten Fahrzeugs 110-3 zu den jeweiligen Lieferpunkten 150 transportiert und dort entladen. Hierbei können die Lieferpunkte 150 in der Nähe eines Produktionsbetriebs, wie einer Fabrik, eines Bürogebäudes, eines Wohnblocks oder eines Wohnhauses liegen. Ferner wird der Transport der Gegenstände 160 von dem Verteilungspunkt 140 zu den Lieferpunkten 150 mittels des dritten Fahrzeugs 110-3 häufig als Sammelgutverkehr bezeichnet.

In einigen Ausführungsbeispielen basiert das Transportsystem 100 auf einem Lieferkonzept mit einem Netzwerk von Liefer- und Verteilzentren, wie dem Sammelpunkt 130 und dem Verteilungspunkt 140. Hierbei dienen die Liefer- und Verteilzentren als lokal gebundene Knotenpunkte zwischen einzelnen Transportrouten der Fahrzeuge 110. Ferner sind die Transportrouten hierbei festgelegt und Gegenstände 160, wie Sendungen, werden nur an den lokalen Knotenpunkten ausgetauscht.

Ein Ansatz, um den Transport in dem Transportsystem 100 effizienter zu gestalten, kann ein Austausch von Gegenständen 160 zwischen zwei Fahrzeugen 110 sein, wenn sich die beiden Fahrzeuge 110 begegnen. Diesbezüglich zeigt Fig. 2 eine schematische Darstellung des Transportsystems 100 gemäß einem weiteren Ausführungsbeispiel. Das Transportsystem 100 umfasst fünf Fahrzeuge 110, vier Abholpunkte 120, einen Sammelpunkt 130, einen Verteilungspunkt 140 und vier Lieferpunkte 150. Im Unterschied zu dem in der Fig. 1 gezeigten Transportsystem 100 befindet sich ein Lieferpunkt 150-4 in Nähe der Abholpunkte 120. Soll ein Gegenstand 160 von einem der Abholpunkte 120 zum dem Lieferpunkt 150-4 transportiert werden, wird der Gegenstand 160 mit einem ersten Fahrzeug 110-1, 110-2 an dem Abholpunkt 120 abgeholt. Ferner trifft sich das erste Fahrzeug 110-1, 110-2 mit einem zweiten Fahrzeug 110-3 in einem Bereich 210, um den Gegenstand 160 an das zweite Fahrzeug 110-3 zu übergeben. Anschließend transportiert das zweite Fahrzeug 110-3 den Gegenstand 160 zu dem Lieferpunkt 150-4. Ein Transport von Gegenständen 160 von den Abholpunkten 120 zu den weiter entfernten Lieferpunkten 150-1, 150-2, 150-3 erfolgt wie in dem im Zusammenhang mit der Fig. 1 beschriebenen Transportsystem 100.

Bei einigen Ausführungsbeispielen liegt dem in der Fig. 2 gezeigten Transportsystem 100 ein Logistikkonzept zugrunde, in welchem kleine Fahrzeuge 110 Gegenstände 160, wie Sendungen, einladen bzw. mit diesen beladen werden. Beispielsweise werden die Fahrzeuge 110 an einer Poststation beladen. Die kleinen Fahrzeuge 110 übergeben und übernehmen Gegenstände 160, wie Sendungen, an einem wählbaren Ort. Für eine Innenstadtlieferung werden Gegenstände 160 direkt an andere kleine Fahrzeuge 110 übergeben, beispielsweise wenn ein zugehöriger Lieferpunkt 150 oder ein Ziel in der Nähe ist. Für einen Überlandbereich werden die Gegenstände 160 an größere Fahrzeuge 110, wie mobile Zwischenspeicher oder mobile Sendungsstation in Containergröße auf einem Lastkraftwage (LKW), übergeben.

In dem Transportsystem 100 wird zum Transport von Gegenständen 160 für jeden einzelnen Gegenstand 160, wie jede einzelne Sendung, jedes einzelne Paket oder jede einzelne Ware, der effizienteste Auslieferungsweg anhand der verfügbaren Transportrouten von verfügbaren Fahrzeugen 110 unter Berücksichtigung einer möglichen Übergabe von Gegenständen 160 zwischen den Transportrouten bestimmt. Die Bestimmung der Auslieferungswege und der Transportrouten kann durch ein Leitsystem erfolgen. Das Leitsystem kann einen Prozessor und einen Speicher zum Bestimmen der Auslieferungswege und der Transportrouten aufweisen.

Nach dem Bestimmen der Auslieferungswege und der Transportrouten übermittelt das Leitsystem diese an die Fahrzeuge 110. Hierzu kann das Leitsystem eine Kommunikationsschnittstelle zum Übermitteln des bestimmten Auslieferungswegs an die Fahrzeuge 110 über ein Kommunikationsnetzwerk aufweisen. Beispielsweise kommunizieren das Leitsystem und die Fahrzeuge 110 über ein Mobilfunknetzwerk. Die Transportrouten enthalten Übergabepunkte und/oder Übergabezeitpunkte, an welchen ein Gegenstand 160 zwischen zwei Fahrzeugen 110 übergeben wird. Beispielsweise sind in den Transportrouten Längengrade und Breitengrade der Übergabepunkte sowie Datum und Uhrzeit der Übergaben umfasst.

Zur Übergabe eines Gegenstands 160 zwischen zwei Fahrzeugen 110 fahren beide Fahrzeuge 110 den in ihren jeweiligen Transportrouten umfassten Übergabepunkt an. Um das Übergeben des Gegenstands 160 zwischen den beiden Fahrzeugen 110 zu beschleunigen, wird der Gegenstand 160 automatisiert übergeben werden.

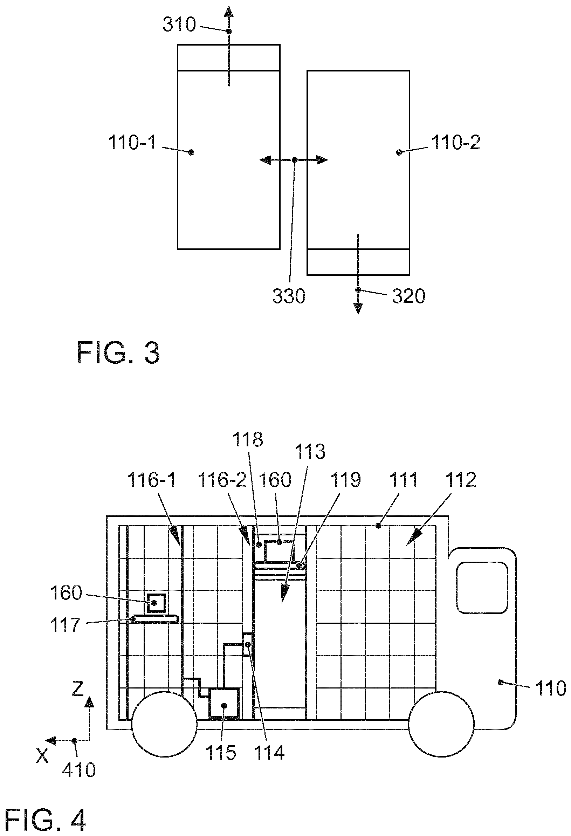

Fig. 3 zeigt eine schematische Darstellung eines Austausches von Gegenständen 160 zwischen zwei Fahrzeugen 110 gemäß einem Ausführungsbeispiel. Hierbei werden die Gegenstände 160 automatisiert zwischen den Fahrzeugen 110 übergeben. Ein erstes Fahrzeug 110-1 ist in einer ersten Fahrtrichtung 310 neben einem zweiten Fahrzeug 110-2 in einer zweiten Fahrtrichtung 320 angeordnet. Hierbei ist die zweite Fahrtrichtung 320 entgegengesetzt zu der ersten Fahrtrichtung 310. Ferner symbolisiert ein Pfeil 330 einen Austausch von Gegenständen 160, wie einen Sendungsaustausch, zwischen dem ersten Fahrzeug 110-1 und dem zweiten Fahrzeug 110-2. Bei einigen Ausführungsbeispielen wird ein zu übergebender Gegenstand 160 von dem ersten Fahrzeug 110-1 in Richtung des zweiten Fahrzeugs 110-2 beschleunigt.

Die Fahrzeuge 110 sind zur automatisierten Übergabe von Gegenständen 160 ausgebildet. Hierzu zeigt Fig. 4 eine schematische Darstellung eines Fahrzeugs 110 gemäß einem Ausführungsbeispiel. Das Fahrzeug 130 weist eine Lagereinrichtung 111 mit einer Mehrzahl von Lagerpositionen 112 für Gegenstände 160 auf, wobei die Lagerposition 112 über mehrere Ebenen der Lagereinrichtung 111 verteilt sind. Die Lagereinrichtung 111 kann als Zwischenspeicher bis zu einem nächsten Knotenpunkt oder zu einer Auslieferung eines Gegenstands 160 dienen.

Ferner weist das Fahrzeug 110 eine Aufnahmeeinrichtung 113 auf, über welche ein Gegenstand 160 in das Fahrzeug 110 eingebracht werden kann. Die Aufnahmeeinrichtung 113 weist eine Öffnung zum Einbringen eines Gegenstands in das Fahrzeug 110 auf. Zudem weist die Aufnahmeeinrichtung 113 ein Bremselement zum Abbremsen oder zum Reduzieren einer kinetischen Energie des eingebrachten Gegenstands 160 auf. Beispielsweise ist das Bremselement ein Kunststoffstreifen, ein nachgiebiger Schaum oder ein Netz. Ferner weist die Aufnahmeeinrichtung 113 eine Einrichtung zur Kompensation von Toleranzen bei dem Einbringen des Gegenstands 160 auf. Beispielsweise ist die Einrichtung zur Kompensation von Toleranzen durch einen Trichter, ein Auffangrollenband mit seitlichen Wänden oder eine große Öffnung gebildet.

Zudem weist das Fahrzeug 110 eine Erfassungseinrichtung 114 auf, mittels welcher eine Information bezüglich des eingebrachten Gegenstands 160 erfasst wird. Bei einigen Ausführungsbeispielen ist an dem Gegenstand 160 ein QR-Code oder ein Barcode angebracht, in welchem die Information kodiert ist, und weist die Erfassungseinrichtung 114 einen optischen Sensor zum Erfassen des QR-Codes oder Barcodes und einen Prozessor zum Extrahieren der Information aus dem erfassten QR-Code oder dem erfassten Barcode auf. Bei manchen Ausführungsbeispielen ist an dem Gegenstand 160 ein RFID-Transponder oder ein NFC-Transponder angebracht, in welchem die Information gespeichert ist, und weist die Erfassungseinrichtung 114 ein RFID-Lesegerät oder ein NFC-Lesegerät zum Auslesen der Information aus dem RFID-Transponder oder dem NFC-Transponder auf. Hierzu kann das RFID-Lesegerät oder das NFC-Lesegerät eine drahtlose Kommunikationsschnittstelle und einen Prozessor aufweisen. Bei einigen Ausführungsbeispielen sendet ein Fahrzeug 110, aus welchem der Gegenstand 160 ausgeladen wird, die Information über ein drahtloses Kommunikationsnetzwerk an ein Fahrzeug 110, in welches der Gegenstand 160 eingebracht wird. Beispielsweise ist das drahtlose Kommunikationsnetzwerk ein WLAN-Netzwerk, ein Car2Car-Netzwek oder ein Car2X-Netzwerk. Bei manchen Ausführungsbeispielen dient das Erfassen der Information bezüglich des Gegenstands 160 einer Identifikation des Gegenstands 160 oder einer Sendungsidentifikation.

Das Fahrzeug 110 weist ferner eine Steuereinrichtung 115 auf, welche ausgebildet ist, auf Basis der erfassten Information eine Lagerposition 112 auszuwählen. Beispielsweise ist die erfasste Information eine dem eingebrachten Gegenstand 160 zugeordnete Lieferadresse, welche eine Postleitzahl, einen Ortsnamen, eine Straße und eine Hausnummer umfasst, und sortiert die Steuereinrichtung 115 alle eingebrachten Gegenstände 160 mit derselben Postleitzahl und Straße in einer Ebene der Lagereinrichtung 111 ein. Zum Auswählen der Lagerposition 112 weist die Steuereinrichtung 115 einen Prozessor und einen Speicher auf, wobei in dem Speicher eine Belegung der Lagerpositionen 112 der Lagereinrichtung 111 sowie die Informationen bezüglich der zugehörigen Gegenstände 160, beispielsweise in Form einer Datenbank, gespeichert sind. Der Prozessor der Steuereinrichtung 115 ist ferner ausgebildet, ein Steuersignal zu erzeugen, welches eine Kennung der ausgewählten Lagerposition 112 umfasst. Beispielsweise sind alle Lagerpositionen 112 der Lagereinrichtung 111 nummeriert und umfasst das Steuersignal eine der ausgewählten Lagerposition 112 zugeordnete Nummer. Bei einigen Ausführungsbeispielen ist die ausgewählte Lagerposition 112 ein individuelles Fach in der Lagereinrichtung 111.

Das Fahrzeug 110 weist zudem zwei Transporteinrichtungen 116 auf. Hierbei können die beiden Transporteinrichtungen 116 zwei unabhängige Portalsysteme zur Sortierung von Gegenständen 160 bilden. In einer Transporteinrichtung 116-1 wird ein auf einer Auflage 117 aufgelegter Gegenstand 160 zu einer ausgewählten Lagerposition 112 transportiert. Die Transporteinrichtung 116-1 weist einen Motor, beispielsweise einen Elektromotor, und ein Getriebe zum Bewegen der Auflage 117 in vertikaler und/oder horizontaler Richtung auf.

Des Weiteren weist das Fahrzeug 110 eine Ausgabeeinrichtung 118 zum Ausgeben eines Gegenstands 160 aus dem Fahrzeug 110 auf. In der Ausgabeeinrichtung 118 ist ein auf einer Auflage 119 aufgelegter Gegenstand 160 angeordnet, welcher aus dem Fahrzeug 110 ausgegeben wird. Bei einigen Ausführungsbeispielen weist die Ausgabeeinrichtung 118 eine Rutsche oder ein Rollenband zum Ausgeben des auszugebenden Gegenstands 160 oder zum Beschleunigen des auszugebenden Gegenstands 160 mittels der auf diesen wirkenden Schwerkraft auf. Bei manchen Ausführungsbeispielen umfasst die Ausgabeeinrichtung 118 ein Transportband zum Ausgeben des auszugebenden Gegenstands 160. Bei einigen Ausführungsbeispielen umfasst die Ausgabeeinrichtung 118 einen translatorischen Schieber oder einen rotatorischen Schieber zum Ausgeben des auszugebenden Gegenstands 160. Beispielsweise drückt der translatorische Schieber den Gegenstand 160 mittels einer Druckfläche aus dem Fahrzeug 110 und wird der translatorische Schieber mittels einer Schubkurbel angetrieben. Bei manchen Ausführungsbeispielen umfasst die Ausgabeeinrichtung 118 einen Kran zum Ausgeben des auszugebenden Gegenstands 160. Bei einigen Ausführungsbeispielen umfasst die Ausgabeeinrichtung 118 eine Verbindungsstelle oder eine Koppelstelle zu einem zweiten Fahrzeug 110. Beispielsweise bildet die Verbindungstelle oder die Koppelstelle eine direkte Verbindung zwischen den Transporteinrichtungen 116 zweier Fahrzeuge 110. Bei manchen Ausführungsbeispielen umfasst die Ausgabeeinrichtung 118 einen, insbesondere einen schwerkraftunterstützten, Kippmechanismus oder einen, insbesondere einen schwerkraftunterstützten, Schwenkmechanismus zum Ausgeben des auszugebenden Gegenstands 160. Beispielsweise wird zur Ausgabe des Gegenstands 160 ein Aufbau des Fahrzeugs 110 gekippt. Bei einigen Ausführungsbeispielen bilden die Aufnahmeeinrichtung 113 und die Ausgabeeinrichtung 118 einen Ein-/Ausgabebereich.

Ferner ist in der Fig. 4 ein kartesisches Koordinatensystem 410 abgebildet. Hierbei gibt eine Koordinate z eine vertikale Richtung an während eine Koordinate x eine horizontale Richtung in Richtung einer Länge des Fahrzeugs 110 angibt.

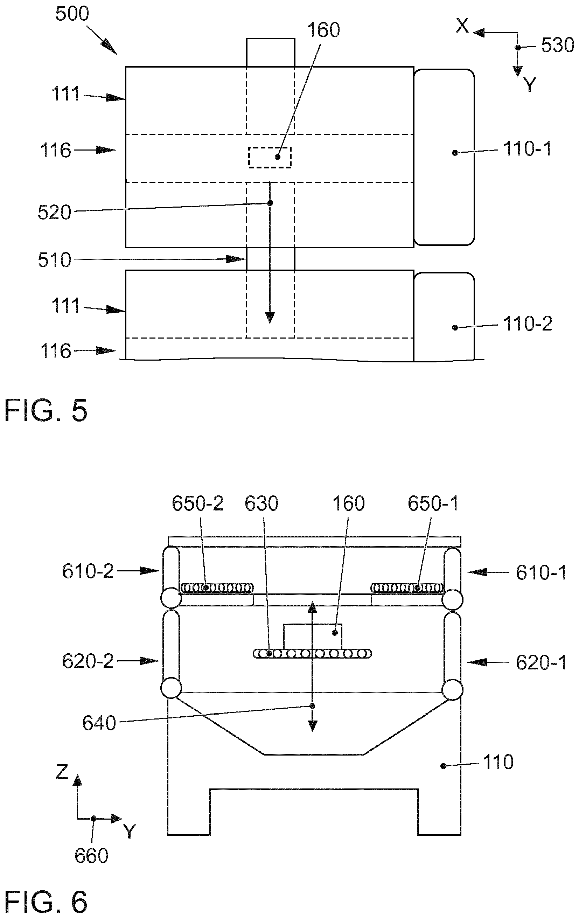

Fig. 5 zeigt eine schematische Darstellung einer Anordnung 500 zur Übergabe eines Gegenstands 160 von einem ersten Fahrzeug 110-1 zu einem zweiten Fahrzeug 110-2 gemäß einem Ausführungsbeispiel. Hierbei weisen die jeweiligen Fahrzeuge 110-1, 110-2 jeweils eine Lagereinrichtung 111, wie ein Regalsystem, und eine Transporteinrichtung 116, wie ein Portalsystem zur Sortierung, auf. Ferner ist zwischen dem ersten Fahrzeug 110-1 und dem zweiten Fahrzeug 110-2 ein Rollenband 510, wie ein Rollband oder ein Übergaberollband, angeordnet. Das Rollenband 510 kann ein Element der Ausgabeeinrichtung 118 des ersten Fahrzeugs 110-1 oder ein Element der Aufnahmeeinrichtung 113 des zweiten Fahrzeugs 110-2 sein. Zur Übergabe des Gegenstands 160 von dem ersten Fahrzeug 110-1 zu dem zweiten Fahrzeug 110-2 wird der Gegenstand 160 in einer Bewegungsrichtung 520 von der Transporteinrichtung 116 des ersten Fahrzeugs 110-1 zu dem Rollenband 510 transportiert. Der Gegenstand 160 wird ferner über das Rollenband 510 zu dem zweiten Fahrzeug 110-2 transportiert und in das zweite Fahrzeug 110-2 entlang der Bewegungsrichtung 520 eingebracht.

Ferner ist in der Fig. 5 ein kartesisches Koordinatensystem 530 abgebildet. Das Koordinatensystem 530 umfasst die Koordinate x sowie eine Koordinate y, welche eine horizontale Richtung senkrecht zur Koordinate x angibt.

Fig. 6 zeigt eine schematische Darstellung eines Fahrzeugs 110 gemäß einem weiteren Ausführungsbeispiel. Das Fahrzeug 110 weist auf beiden Seiten jeweils eine Ausgabeeinrichtung 118 mit einem ausklappbaren Rollenband 610 für eine Ausgabe von Gegenständen 160 und einem Transportband 650 auf. Ferner weist das Fahrzeug 110 auf beiden Seiten jeweils eine Aufnahmeeinrichtung 113 mit einem ausklappbaren Rollenband 620 für eine Aufnahme von Gegenständen 160 auf. In dem Fahrzeug 110 ist ein Gegenstand 160 angeordnet, welcher auf einem Transportband 630 aufgelegt ist. Hierbei kann das Transportband 630 in die durch den Pfeil 640 angedeuteten Richtungen bewegt werden. Ferner ist in der Fig. 6 ein kartesisches Koordinatensystem 660 mit den Koordinaten y und z abgebildet.

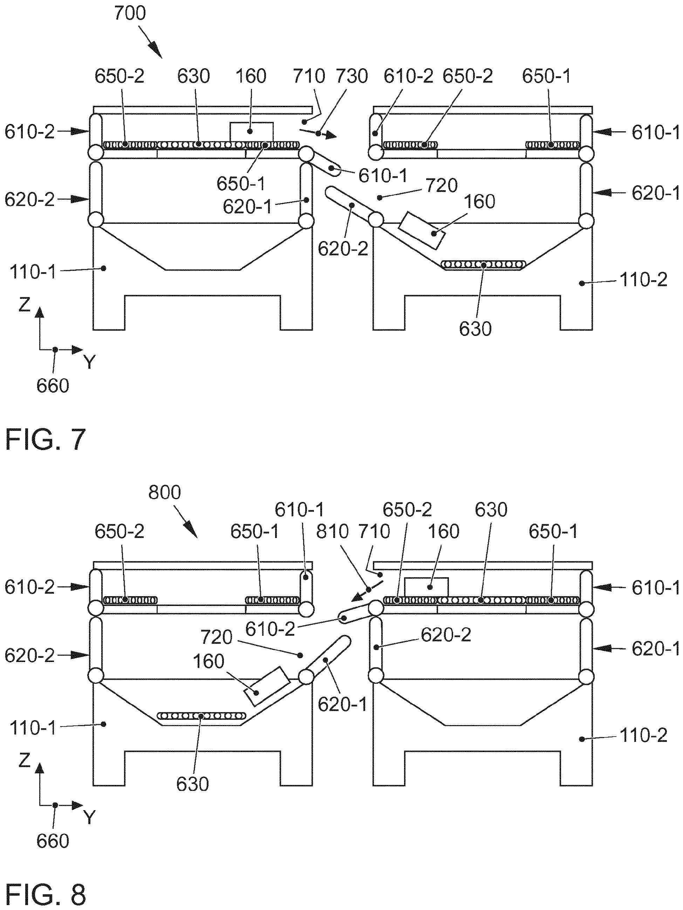

Ein Austausch von Gegenständen 160, wie Sendungen, zwischen zwei Fahrzeugen 110 kann nacheinander erfolgen. Fig. 7 zeigt eine schematische Darstellung einer Anordnung 800 zur Übergabe eines Gegenstands 160 von einem ersten Fahrzeug 110-1 zu einem zweiten Fahrzeug 110-2 gemäß einem weiteren Ausführungsbeispiel. Die jeweiligen Fahrzeuge 110-1, 110-2 sind gemäß dem in der Fig. 6 gezeigten Ausführungsbeispiel ausgebildet. Ferner sind das erste Fahrzeug 110-1 und das zweite Fahrzeug 110-2 nebeneinander in gleicher Richtung positioniert, sodass sich die Rollbänder 610 oder die Rollbänder 620 auf gleicher Höhe befinden. Alternativ können die jeweiligen Fahrzeuge 110-1, 110-2 in entgegengesetzter Richtung positioniert sein.

In dem ersten Fahrzeug 110-1 ist ein zu übergebender Gegenstand 160 angeordnet. Zur Übergabe des zu übergebenden Gegenstands 160 fährt oder klappt das Rollenband 610-1 für die Ausgabe aus oder auf und öffnet dadurch eine Ausgabeöffnung 710 in dem ersten Fahrzeug 110-1. Ferner fährt oder klappt das zweite Fahrzeug 110-2 das Rollenband 620-2 für die Aufnahme aus oder auf und öffnet dadurch eine Aufnahmeöffnung 720 des zweiten Fahrzeugs 110-2. Der zu übergebende Gegenstand 160 wird mittels der Transportbänder 630, 650-1 des ersten Fahrzeugs 110-1 beschleunigt und wird entlang einer Bewegungsrichtung 730 über das Rollenband 610-1 des ersten Fahrzeugs 110-1 und das Rollenband 620-2 des zweiten Fahrzeugs 110-2 in das zweite Fahrzeug 110-2 eingebracht. Nach der Übergabe liegt der Gegenstand 160 auf dem Transportband 630 des zweiten Fahrzeugs 110-2 auf und kann, beispielsweise über ein Bandsystem, verladen werden. Beispielsweise wird der Gegenstand 160 zu einer ausgewählten Lagerposition 112 in dem zweiten Fahrzeug 110-2 transportiert.

Ferner ist in der Fig. 7 das kartesische Koordinatensystem 660 mit den Koordinaten y und z abgebildet.

Fig. 8 zeigt eine schematische Darstellung einer Anordnung 800 zur Übergabe eines Gegenstands 160 von dem zweiten Fahrzeug 110-2 zu dem ersten Fahrzeug 110-2 gemäß dem in der Fig. 7 dargestellten Ausführungsbeispiel.

In dem zweiten Fahrzeug 110-2 ist ein zu übergebender Gegenstand 160 angeordnet. Zur Übergabe des zu übergebenden Gegenstands 160 fährt oder klappt das Rollenband 610-2 für die Ausgabe aus oder auf und öffnet dadurch eine Ausgabeöffnung 710 in dem zweiten Fahrzeug 110-2. Ferner fährt oder klappt das erste Fahrzeug 110-1 das Rollenband 620-1 für die Aufnahme aus oder auf und öffnet dadurch eine Aufnahmeöffnung 720 des ersten Fahrzeugs 110-1. Der zu übergebende Gegenstand 160 wird mittels der Transportbänder 630, 650-2 des zweiten Fahrzeugs 110-2 beschleunigt und wird entlang einer Bewegungsrichtung 810 über das Rollenband 610-2 des zweiten Fahrzeugs 110-2 und das Rollenband 620-1 des ersten Fahrzeugs 110-1 in das erste Fahrzeug 110-1 eingebracht. Nach der Übergabe liegt der Gegenstand 160 auf dem Transportband 630 des ersten Fahrzeugs 110-1 auf und kann, beispielsweise über ein Bandsystem, verladen werden. Beispielsweise wird der Gegenstand 160 zu einer ausgewählten Lagerposition 112 in dem ersten Fahrzeug 110-1 transportiert.

Bei einigen Ausführungsbeispielen können die Fahrzeuge 110 ihre Route nach dem Austausch der Gegenstände 160 fortsetzen. Bei manchen Ausführungsbeispielen werden die Gegenstände 160 während einer Fahrt des Fahrzeugs 100 innerhalb des Fahrzeugs optimal umsortiert.

Ferner ist in der Fig. 8 das kartesische Koordinatensystem 660 mit den Koordinaten y und z abgebildet.

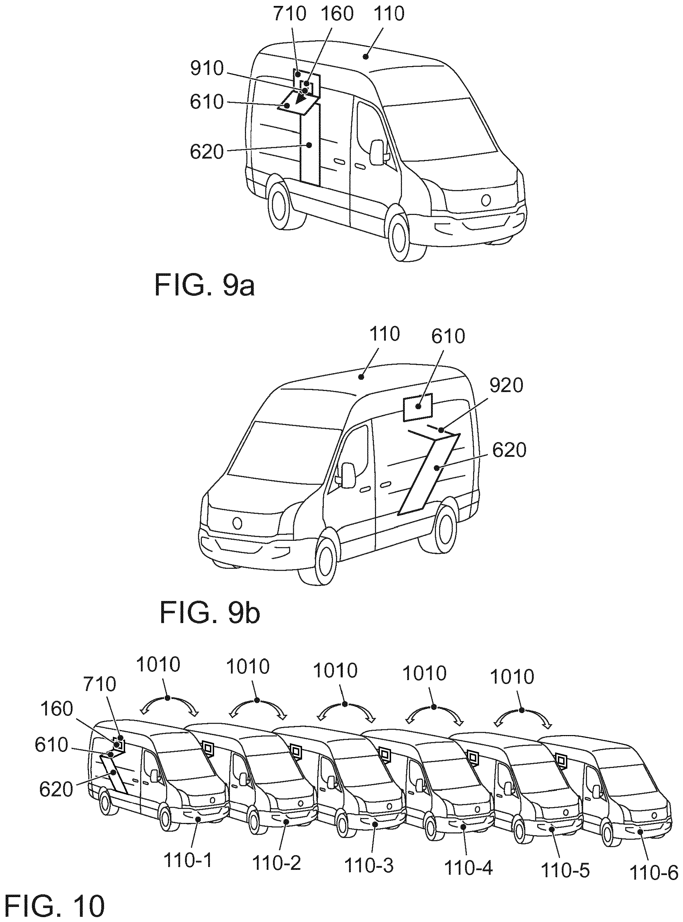

Figs. 9a-b zeigen perspektivische Ansichten eines Fahrzeugs 110 gemäß einem weiteren Ausführungsbeispiel. In der in der Fig. 9a gezeigten Ansicht ist die Ausgabeöffnung 710 des Fahrzeugs 110 geöffnet und ein Gegenstand 160 kann über das ausgeklappte Rollenband 610 zur Ausgabe entlang einer Bewegungsrichtung 910 ausgegeben werden. Ferner weist das Fahrzeug 110 das Rollenband 620 zur Aufnahme auf, welches eingeklappt ist. In der in der Fig. 9b gezeigten Ansicht ist die Ausgabeöffnung 710 des Fahrzeugs 110 durch das eingeklappte Rollenband 610 zur Ausgabe verschlossen. Ferner ist das Rollenband 620 zur Aufnahme aufgeklappt. Hierbei kann das Rollenband 620 zur Aufnahme mittels Schubstangen 920 aufgeklappt werden.

Fig. 10 zeigt eine Anordnung 1000 mit einer Mehrzahl von Fahrzeugen 110 gemäß dem in den Figs. 9a-b gezeigten Ausführungsbeispiel. Insgesamt sind sechs Fahrzeuge 110 abgebildet, bei welchen jeweils das Rollenband 610 zur Ausgabe und das Rollenband 620 zur Aufnahme aufgeklappt ist. Hierdurch ist bei jedem der Fahrzeuge 110 die Ausgabeöffnung 710 und die nicht abgebildete Aufnahmeöffnung 720 geöffnet. Die Fahrzeuge 110 tauschen, wie durch die Pfeile 1010 symbolisiert, untereinander Gegenstände 160 aus.

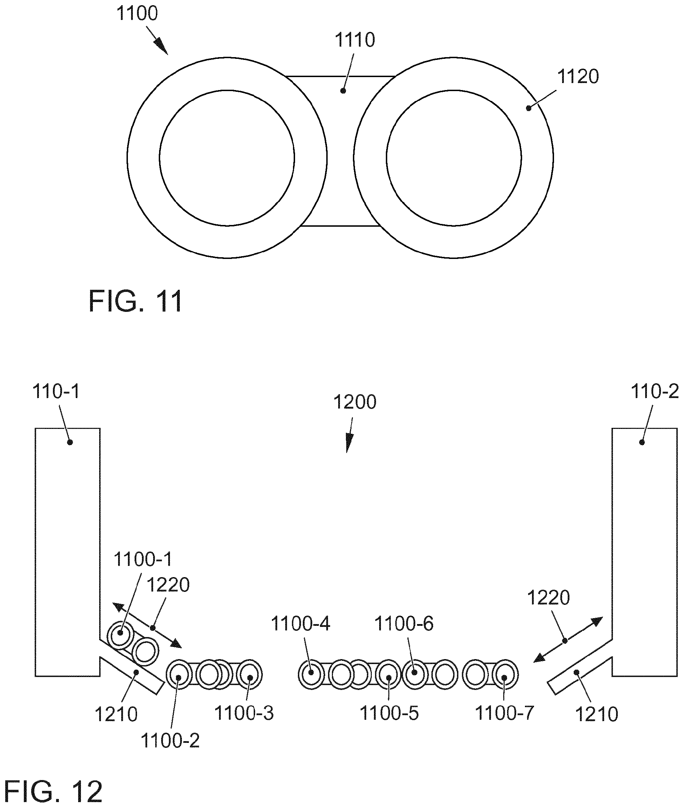

Ein weiteres erfindungsgemäßes Konzept zum Umladen von Gegenständen 160 zwischen zwei Fahrzeugen 110 kann mittels eines weiteren Fahrzeugs, wie eines mobilen Roboters oder eines mobilen Briefkastens, realisiert werden. Fig. 11 zeigt eine schematische Darstellung des weiteren Fahrzeugs 1100 gemäß einem Ausführungsbeispiel. Das weitere Fahrzeug 1100 weist eine Aufnahmebox 1110 mit einem Aufnahmeraum zur Aufnahme einer Sendung, wie eines Pakets oder eines Briefs, und ein Fahrwerk 1120 auf. Bei einigen Ausführungsbeispielen bildet oder ist die Aufnahmebox 1110 eine geschützte Box. Bei manchen Ausführungsbeispielen ist das Fahrwerk 1120 derart ausgebildet, dass sich das weitere Fahrzeug 1100 in einem entsprechenden Terrain bewegen kann. Ferner kann das weitere Fahrzeug 1100 ausgebildet oder in der Lage sein, selbständig zu navigieren. Hierzu kann das weitere Fahrzeug 1100 eine Positionsbestimmungseinrichtung und einen Prozessor zum Steuern des Fahrwerks 1120 aufweisen. Ferner kann der Gegenstand 160 durch das weitere Fahrzeug 1100 gebildet sein.

Fig. 12 zeigt eine schematische Darstellung einer Anordnung 1200 zum Umladen von Sendungen unter Verwendung des in Fig. 11 gezeigten weiteren Fahrzeugs 1100 gemäß einem Ausführungsbeispiel. Die Anordnung 1200 umfasst zwei Fahrzeuge 110, welche jeweils eine geöffnete Klappe 1210 aufweisen. Hierbei kann die geöffnete Klappe 1210 eine Rampe bilden. Zudem umfasst die Anordnung 1200 sieben weitere Fahrzeuge 1100, welche sich entlang der mit Pfeilen 1220 symbolisierten Bewegungsrichtungen bewegen. In der Anordnung 1200 wird das Umladen der Sendungen wie folgt durchgeführt. Zu Beginn sind die Fahrzeuge 110, wie Lieferfahrzeuge, jeweils mit mehreren weiteren Fahrzeugen 1100 bestückt. Zum Umladen zwischen den beiden Fahrzeugen 110 werden an einem frei definierbaren Ort die Klappen 1210 geöffnet und die weiteren Fahrzeuge 1100, in welchen jeweils Sendungen, aufgenommen sind, tauschen individuell und selbstständig das Fahrzeug 110. Bei einigen Ausführungsbeispielen ermöglichen die weiteren Fahrzeuge 1100 ein automatisiertes Umladen von Sendungen zwischen den Fahrzeugen 110, wie Auslieferfahrzeugen.

Nach der Einfahrt in ein Fahrzeug 110 werden die weiteren Fahrzeuge 1100 mittels der Transporteinrichtung 116 zu den ausgewählten Lagerpositionen 112 transportiert. Hierzu kann die Transporteinrichtung 116 ein Fahrstuhlsystem oder ein Rampensystem aufweisen, über welches die weiteren Fahrzeuge 1100 in die unterschiedlichen Ebenen der Lagereinrichtung 111 transportiert werden können. Eine Feinpositionierung zu der jeweiligen ausgewählten Lagerposition 112 kann durch die weiteren Fahrzeuge 1100 selbst durchgeführt werden.

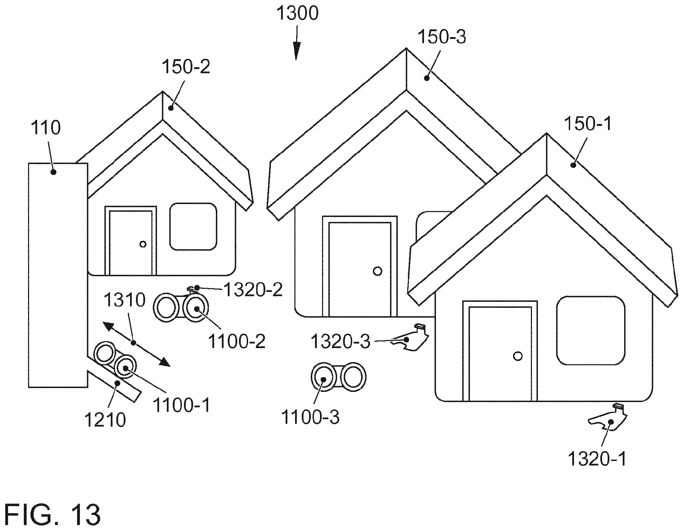

Das Ausliefern der Sendungen auf den letzten Metern, beispielsweise von einem Fahrzeug 110 zu einer Haustür oder von einer Haustür zu einem Fahrzeug 110, kann ebenfalls durch das weitere Fahrzeug 1100 erfolgen. Diesbezüglich zeigt Fig. 13 eine schematische Darstellung einer Anordnung 1300 zur Auslieferung von Sendungen von einem Fahrzeug 110 zu Lieferpunkten 150. Das Fahrzeug 110 öffnet in der Nähe der Lieferpunkte 150 die Klappe 1210 und die weiteren Fahrzeuge 1100, in welchen jeweils eine Sendung aufgenommen ist, verlassen das Fahrzeug 110 über die Klappe 1210 in einer Bewegungsrichtung 1310. Anschließend steuern die weiteren Fahrzeuge 1100 selbständig den der jeweils aufgenommenen Sendung zugeordneten Lieferpunkt 150, wie ein Haus, an. Dort verbleiben die weiteren Fahrzeuge 1100 bis zu deren Entleerung und/oder potentiellen Neubefüllung. Optional werden Akkumulatoren der weiteren Fahrzeuge 1100 hierbei mittels an den Lieferpunkten 150 angeordneten Ladestationen 1320 geladen.

Bei einigen Ausführungsbeispielen werden mittels des Fahrzeugs 110, wie einem Auslieferfahrzeug, mehrere weitere Fahrzeuge 1100 in die Nähe der Lieferpunkte 150 oder von Sendungsempfängern befördert, abgesetzt und gegebenenfalls wieder eingesammelt.

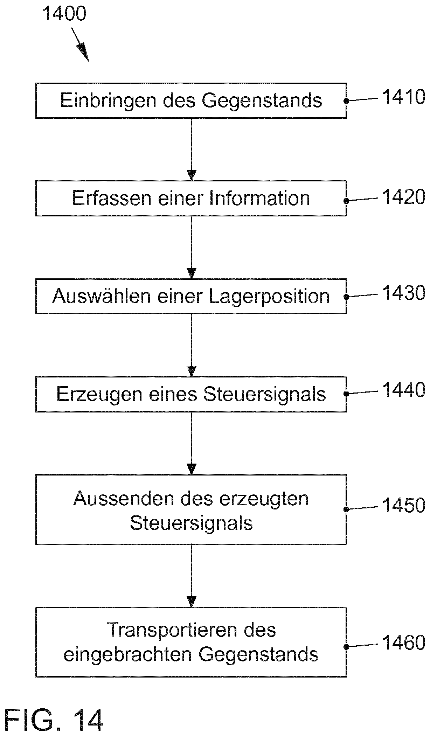

Fig. 14 zeigt ein schematisches Diagramm eines Verfahrens 1400 zum Einlagern eines Gegenstands 160 in einem Fahrzeug 110 gemäß einem Ausführungsbeispiel. Das Verfahren 1400 umfasst ein Einbringen 1410 des Gegenstands 160 in das Fahrzeug 110 mittels der Aufnahmeeinrichtung 113 des Fahrzeugs 110. Zudem umfasst das Verfahren 1400 ein Erfassen 1420, durch die Erfassungseinrichtung 114 des Fahrzeugs 110, einer Information bezüglich des eingebrachten Gegenstands 160. Das Verfahren 1400 umfasst ferner ein Auswählen 1430, mittels der Steuereinrichtung 115 des Fahrzeugs 115, einer Lagerposition 112 aus der Mehrzahl der Lagerpositionen 112 auf Basis der empfangenen Information. Zudem umfasst das Verfahren 1400 ein Erzeugen 1440, mittels der Steuereinrichtung 115 des Fahrzeugs 110, eines Steuersignals, welches zu der ausgewählten Lagerposition 112 korrespondiert. Das Verfahren 1400 umfasst ferner ein Aussenden 1450, mittels der Steuereinrichtung 115 des Fahrzeugs 110, des erzeugten Steuersignals über ein Kommunikationsnetzwerk. Des Weiteren umfasst das Verfahren 1400 ein Transportieren 1460, mittels der Transporteinrichtung 116, des eingebrachten Gegenstands 160 zu der ausgewählten Lagerposition 112 ansprechend auf das Steuersignals.

Bei manchen Ausführungsbeispielen können durch eine schnelle automatisierte Übergabe an Kreuzungspunkten der Transportrouten Doppelfahrten vermieden und kürzere Zustellzeiten ermöglicht werden. Das heißt, Gegenstände 160, wie Sendungen, werden nicht aus den Fahrzeugen 110 ausgeladen, zwischengelagert, eingeladen und ausgefahren, sondern werden über mehrere Fahrzeuge 110 direkt zugestellt. Hierbei kann die Aufgabe der Logistikzentren und Verteilzentren wird auf die Kreuzungspunkte der Transportrouten verlagert werden.

Bei einigen Ausführungsbeispielen können die Rollbänder 610, 620 durch Klappen mit Rollen gebildet sein. Bei manchen Ausführungsbeispielen kann das Transportband 630 einen hohen Reibwert aufweisen und als Puffer verwendet werden. Bei einigen Ausführungsbeispielen kann die Transporteinrichtung 117 ein Portalsystem mit Förderband zum Ein- und Auslagern mit zwei Plattformen sein oder bilden. Bei manchen Ausführungsformen kann die Transporteinrichtung 117 eine Sendungssortierung während einer Fahrt des Fahrzeugs optimieren. Bei einigen Ausführungsbeispielen können die Rollbänder 610, 620 oder Ein- und Ausladeklappen so schmal wie möglich ausgeführt werden.

Bei einigen Ausführungsbeispielen kann ein Logistikkonzept eine Verkürzung von Ausfahrwegen von Fahrzeugen 110 oder Transportern vorsehen. Eine Basis für dieses Logistikkonzept oder diesen Ansatz kann ein schneller und automatisierter Austausch von Gegenständen 160, wie Paketen oder Waren, zwischen den Fahrzeugen 110 und/oder eine automatische oder automatisierte Auslieferung mittels der weiteren Fahrzeuge 1100 oder mobilen Briefkästen sein.

Bei manchen Ausführungsbeispielen kann mittels des erfindungsgemäßen Fahrzeugs 110 oder des erfindungsgemäßen Verfahrens 1400 ein sehr großer Zeitvorteil, beispielsweise durch eine Reduzierung von Wegen, Sortierzeiten und Verweilzeiten in Paketzentren, erreicht werden.

Bei einigen Ausführungsbeispielen kann mittels des erfindungsgemäßen Fahrzeugs 110 oder des erfindungsgemäßen Verfahrens 1400 eine hohe Flexibilität bei einem Einsatz von Auslieferfahrzeugen erreicht werden.

Bei manchen Ausführungsbeispielen kann mittels des erfindungsgemäßen Fahrzeugs 110 oder des erfindungsgemäßen Verfahrens 1400 eine Reduzierung von Fahrertätigkeiten, wie Sortier-, Ein- und Ausladevorgänge, erreicht werden.

Bei einigen Ausführungsbeispielen kann mittels des erfindungsgemäßen Fahrzeugs 110 oder des erfindungsgemäßen Verfahrens 1400 eine Vorbereitung für ein automatisches fahrerloses Fahren von Auslieferfahrzeugen getroffen werden.

Bei manchen Ausführungsbeispielen bildet die Aufnahmeeinrichtung 113 und/oder die Ausgabeeinrichtung 118 eine Vorrichtung zum Austausch von Gegenständen 160 zwischen Fahrzeugen 110.

Alternativ kann das Verfahren 1400 auch zum Einlagern eines Gegenstands 160 in ein Gebäude oder eine Paketstation verwendet werden. Hierzu können entsprechende Schnittstelle an dem Gebäude oder der Paketstation vorgesehen werden. Bei einigen Ausführungsbeispielen kann eine Umlademöglichkeit bei der Bestückung von Paketstationen oder privaten und öffentlichen Einrichtungen geschaffen werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Transportsystem
- 110: Fahrzeug
- 111: Lagereinrichtung
- 112: Lagerposition
- 113: Aufnahmeeinrichtung
- 114: Erfassungseinrichtung
- 115: Steuereinrichtung
- 116: Transporteinrichtung
- 117: Auflage
- 118: Ausgabeeinrichtung
- 119: Auflage
- 120: Abholpunkt
- 130: Sammelpunkt
- 140: Verteilungspunkt
- 150: Lieferpunkt
- 210: Bereich
- 310: erste Fahrtrichtung
- 320: zweite Fahrtrichtung
- 330: Pfeil
- 410: Koordinatensystem
- 500: Anordnung
- 510: Rollenband
- 520: Bewegungsrichtung
- 530: Koordinatensystem
- 610: Rollenband
- 620: Rollenband
- 630: Transportband
- 650: Pfeil
- 650: Transportband
- 660: Koordinatensystem
- 700: Anordnung
- 710: Ausgabeöffnung
- 720: Aufnahmeöffnung
- 730: Bewegungsrichtung
- 800: Anordnung
- 810: Bewegungsrichtung
- 910: Bewegungsrichtung
- 920: Schubstange
- 1000: Anordnung
- 1010: Pfeil
- 1100: weiteres Fahrzeug
- 1110: Aufnahmebox
- 1120: Fahrwerk
- 1200: Anordnung
- 1210: Klappe
- 1220: Pfeil
- 1300: Anordnung
- 1310: Bewegungsrichtung
- 1320: Ladestation
- 1400: Verfahren
- 1410: Einbringen
- 1420: Erfassen
- 1430: Auswählen
- 1440: Erzeugen
- 1450: Aussenden
- 1460: Transportieren
- x: Koordinate
- y: Koordinate
- z: Koordinate

## Patentansprüche

1. Fahrzeug (110) zum Transportieren eines Gegenstands (160), mit:
einer Lagereinrichtung (111) mit einer Mehrzahl von Lagerpositionen (112) für Gegenstände (160);
einer Aufnahmeeinrichtung (113) zum Einbringen des Gegenstands (160) in das Fahrzeug (110), wobei die Aufnahmeeinrichtung (113) eine Aufnahmeöffnung (720) und ein schwenkbares Transportelement zum Transport von Gegenständen (160) aufweist, wobei das schwenkbare Transportelement zwischen einer ersten Position, in welcher die Aufnahmeöffnung (720) durch das schwenkbare Transportelement verschlossen ist, und einer zweiten Position, in welcher die Aufnahmeöffnung (720) geöffnet ist, verschwenkbar ist;
einer Erfassungseinrichtung (114) zum Erfassen einer Information bezüglich des eingebrachten Gegenstands (160);
einer Steuereinrichtung (115), welche ausgebildet ist, auf Basis der erfassten Information eine Lagerposition (112) aus der Mehrzahl der Lagerpositionen (112) auszuwählen, ein Steuersignal, welches zu der ausgewählten Lagerposition (112) korrespondiert, zu erzeugen, und das erzeugte Steuersignal über ein Kommunikationsnetzwerk auszusenden; und
einer Transporteinrichtung (116), welche ausgebildet ist, ansprechend auf das Steuersignal den eingebrachten Gegenstand (160) zu der ausgewählten Lagerposition (112) zu transportieren.

2. Fahrzeug (110) gemäß Anspruch 1, wobei das schwenkbare Transportelement der Aufnahmeeinrichtung (113) ein Rollenband (620), eine Rutsche, ein Transportband oder eine Rampe umfasst.

3. Fahrzeug (110) gemäß einem der vorhergehenden Ansprüche, wobei die Aufnahmeeinrichtung (113) ein Bremselement zum Abbremsen des über die Aufnahmeeinrichtung (113) eingebrachten Gegenstands (160) aufweist.

4. Fahrzeug (110) gemäß Anspruch 3, wobei das Bremselement einen Kunststoffstreifen, ein Schaumelement oder ein Netz umfasst.

5. Fahrzeug (110) gemäß einem der vorhergehenden Ansprüche, mit einer Ausgabeeinrichtung (118) zum Ausgeben des eingebrachten Gegenstands (160) aus dem Fahrzeug (110), wobei die Transporteinrichtung (116) ferner ausgebildet ist, den eingebrachten Gegenstand (160) zu der Ausgabeeinrichtung (118) zu transportieren.

6. Fahrzeug (110) gemäß Anspruch 5, wobei die Ausgabeeinrichtung (118) eine Ausgabeöffnung (710) und ein schwenkbares Transportelement zum Transport von Gegenständen (160) aufweist, wobei das schwenkbare Transportelement zwischen einer ersten Position, in welcher die Ausgabeöffnung (710) durch das schwenkbare Transportelement verschlossen ist, und einer zweiten Position, in welcher die Ausgabeöffnung (710) geöffnet ist, verschwenkbar ist.

7. Fahrzeug (110) gemäß Anspruch 6, wobei das schwenkbare Transportelement der Ausgabeeinrichtung (118) ein Rollenband (610), eine Rutsche, ein Transportband oder eine Rampe umfasst.

8. Fahrzeug (110) gemäß Anspruch 5, wobei die Ausgabeeinrichtung (118) durch eine Verbindungsstelle zu einem zweiten Fahrzeug (110), eine Koppelstelle zu einem zweiten Fahrzeug (110), einen translatorischen Schieber, einen rotatorischen Schieber, einen Kran, einen Kippmechanismus oder einen Schwenkmechanismus gebildet ist.

9. Fahrzeug (110) gemäß einem der vorhergehenden Ansprüche, wobei der Gegenstand (160) ein Paket, eine Warensendung, ein Brief oder ein weiteres Fahrzeug (1100) ist, und wobei das weitere Fahrzeug (1100) einen Aufnahmeraum aufweist, in welchem ein Paket, eine Warensendung oder ein Brief aufgenommen ist.

10. Fahrzeug (110) gemäß einem der vorhergehenden Ansprüche, wobei der eingebrachte Gegenstand (160) einen optischen Kode, in welchem die Information bezüglich des eingebrachten Gegenstands (160) gespeichert ist, aufweist, und wobei die Erfassungseinrichtung (114) einen optischen Sensor zum Erfassen des optischen Kodes und einen Prozessor zum Extrahieren der Information bezüglich des eingebrachten Gegenstands (160) aus dem erfassten optischen Kode aufweist.

11. Fahrzeug (110) gemäß einem der Ansprüche 1 bis 9, wobei die Erfassungseinrichtung (114) eine drahtlose Kommunikationsschnittstelle zum Erfassen eines über ein drahtloses Kommunikationsnetzwerk ausgesendeten Kommunikationssignals, welches die Information bezüglich des eingebrachten Gegenstands (160) umfasst, und einen Prozessor zum Extrahieren der Information bezüglich des eingebrachten Gegenstands (160) aus dem empfangenen Kommunikationssignals aufweist.

12. Fahrzeug (110) gemäß einem der vorhergehenden Ansprüche, wobei die Information bezüglich des eingebrachten Gegenstands (160) eine dem eingebrachten Gegenstand (160) zugeordnete Lieferadresse, eine geometrische Abmessung des eingebrachten Gegenstands (160) oder einen Gewichtswert des eingebrachten Gegenstands (160) umfasst.

13. Verfahren (1400) zum Einlagern eines Gegenstands (160) in einem Fahrzeug (110), wobei das Fahrzeug (110) eine Lagereinrichtung (111) mit einer Mehrzahl von Lagerpositionen (112) für Gegenstände (160) und eine Transporteinrichtung (116) zum Transportieren des Gegenstands (160) zu den Lagerpositionen (112) aufweist, mit:
Einbringen (1410) des Gegenstands (160) in das Fahrzeug (110) mittels einer Aufnahmeeinrichtung (113) des Fahrzeugs (110), wobei die Aufnahmeeinrichtung (113) eine Aufnahmeöffnung (720) und ein schwenkbares Transportelement zum Transport von Gegenständen (160) aufweist, wobei das schwenkbare Transportelement zwischen einer ersten Position, in welcher die Aufnahmeöffnung (720) durch das schwenkbare Transportelement verschlossen ist, und einer zweiten Position, in welcher die Aufnahmeöffnung (720) geöffnet ist, verschwenkbar ist;
Erfassen (1420), durch eine Erfassungseinrichtung (114) des Fahrzeugs (110), einer Information bezüglich des eingebrachten Gegenstands (160);
Auswählen (1430), mittels einer Steuereinrichtung (115) des Fahrzeugs (110), einer Lagerposition (112) aus der Mehrzahl der Lagerpositionen (112) auf Basis der empfangenen Information;
Erzeugen (1440), mittels der Steuereinrichtung (115) des Fahrzeugs (110), eines Steuersignals, welches zu der ausgewählten Lagerposition (112) korrespondiert;
Aussenden (1450), mittels der Steuereinrichtung (115) des Fahrzeugs (110), des erzeugten Steuersignals über ein Kommunikationsnetzwerk; und
Transportieren (1460), mittels der Transporteinrichtung (116), des eingebrachten Gegenstands (160) zu der ausgewählten Lagerposition (112) ansprechend auf das Steuersignals.

## Claims

1. Vehicle (110) for conveying an item (160), having:
a storage device (111) having a plurality of storage positions (112) for items (160);
a receiving device (113) for introducing the item (160) into the vehicle (110), wherein the receiving device (113) has a receiving opening (720) and a pivotable conveyor element for conveying items (160), the pivotable conveyor element being able to be pivoted between a first position, in which the receiving opening (720) is sealed by the pivotable conveyor element, and a second position, in which the receiving opening (720) is open;
a scanning device (114) for scanning information about the introduced item (160);
a control device (115) that is designed to take the scanned information as a basis for selecting a storage position (112) from the plurality of storage positions (112), generating a control signal that corresponds to the selected storage position (112), and transmitting the generated control signal via a communication network; and
a conveyor device (116) that is designed to respond to the control signal by conveying the introduced item (160) to the selected storage position (112).

2. Vehicle (110) according to Claim 1, wherein the pivotable conveyor element of the receiving device (113) comprises a roller conveyor (620), a chute, a conveyor belt or a ramp.

3. Vehicle (110) according to either of the preceding claims, wherein the receiving device (113) has a brake element for slowing down the item (160) introduced via the receiving device (113).

4. Vehicle (110) according to Claim 3, wherein the brake element comprises a plastic strip, a foam element or a net.

5. Vehicle (110) according to one of the preceding claims, having a dispensing device (118) for dispensing the introduced item (160) from the vehicle (110), the conveyor device (116) further being designed to convey the introduced item (160) to the dispensing device (118) .

6. Vehicle (110) according to Claim 5, wherein the dispensing device (118) has a dispensing opening (710) and a pivotable conveyor element for conveying items (160), the pivotable conveyor element being able to be pivoted between a first position, in which the dispensing opening (710) is sealed by the pivotable conveyor element, and a second position, in which the dispensing opening (710) is open.

7. Vehicle (110) according to Claim 6, wherein the pivotable conveyor element of the dispensing device (118) comprises a roller conveyor (610), a chute, a conveyor belt or a ramp.

8. Vehicle (110) according to Claim 5, wherein the dispensing device (118) is formed by a connection point for a second vehicle (110), a coupling point for a second vehicle (110), a translational slide, a rotational slide, a crane, a tilt mechanism or a pivot mechanism.

9. Vehicle (110) according to one of the preceding claims, wherein the item (160) is a parcel, a goods consignment, a letter or a further vehicle (1100), and wherein the further vehicle (1100) has a receiving space in which a parcel, a goods consignment or a letter is received.

10. Vehicle (110) according to one of the preceding claims, wherein the introduced item (160) has an optical code in which the information about the introduced item (160) is stored, and wherein the scanning device (114) has an optical sensor for scanning the optical code and a processor for extracting the information about the introduced item (160) from the scanned optical code.

11. Vehicle (110) according to one of Claims 1 to 9, wherein the scanning device (114) comprises a wireless communication interface for detecting a communication signal, transmitted via a wireless communication network, that comprises the information about the introduced item (160), and a processor for extracting the information about the introduced item (160) from the received communication signal.

12. Vehicle (110) according to one of the preceding claims, wherein the information about the introduced item (160) is a delivery address associated with the introduced item (160), a geometric dimension of the introduced item (160) or a weight value of the introduced item (160).

13. Method (1400) for storing an item (160) in a vehicle (110), wherein the vehicle (110) has a storage device (111) having a plurality of storage positions (112) for items (160) and a conveyor device (116) for conveying the item (160) to the storage positions (112), comprising:
introducing (1410) the item (160) into the vehicle (110) by means of a receiving device (113) of the vehicle (110), wherein the receiving device (113) has a receiving opening (720) and a pivotable conveyor element for conveying items (160), the pivotable conveyor element being able to be pivoted between a first position, in which the receiving opening (720) is sealed by the pivotable conveyor element, and a second position, in which the receiving opening (720) is open;
scanning (1420), by way of a scanning device (114) of the vehicle (110), information about the introduced item (160);
selecting (1430), by means of a control device (115) of the vehicle (110), a storage position (112) from the plurality of storage positions (112) on the basis of the received information;
generating (1440), by means of the control device (115) of the vehicle (110), a control signal that corresponds to the selected storage position (112);
transmitting (1450), by means of the control device (115) of the vehicle (110), the generated control signal via a communication network; and
conveying (1460), by means of the conveyor device (116), the introduced item (160) to the selected storage position (112) in response to the control signal.

## Revendications

1. Véhicule (110) pour transporter un objet (160), comprenant :
un dispositif de stockage (111) pourvu d'une pluralité de positions de stockage (112) pour des objets (160) ;
un dispositif de réception (113) pour introduire l'objet (160) dans le véhicule (110), le dispositif de réception (113) présentant une ouverture de réception (720) et un élément de transport pivotant pour transporter des objets (160), dans lequel l'élément de transport pivotant peut pivoter entre une première position dans laquelle l'ouverture de réception (720) est fermée par l'élément de transport pivotant, et une deuxième position dans laquelle l'ouverture de réception (720) est ouverte ;
un dispositif de détection (114) pour détecter une information concernant l'objet introduit (160) ;
un dispositif de commande (115) qui est réalisé pour sélectionner sur la base de l'information détectée une position de stockage (112) parmi la pluralité de positions de stockage (112), pour générer un signal de commande qui correspond à la position de stockage sélectionnée (112), et pour émettre le signal de commande généré par un réseau de communication ; et
un dispositif de transport (116) qui, en réponse au signal de commande, est réalisé pour transporter l'objet introduit (160) jusqu'à la position de stockage sélectionnée (112).

2. Véhicule (110) selon la revendication 1, dans lequel l'élément de transport pivotant du dispositif de réception (113) comprend un convoyeur à galets (620), un toboggan, une bande transporteuse ou une rampe.

3. Véhicule (110) selon l'une quelconque des revendications précédentes, dans lequel le dispositif de réception (113) présente un élément de freinage pour freiner l'objet (160) introduit par l'intermédiaire du dispositif de réception (113).

4. Véhicule (110) selon la revendication 3, dans lequel l'élément de freinage comprend une bande de matière plastique, un élément en mousse ou un filet.

5. Véhicule (110) selon l'une quelconque des revendications précédentes, comprenant un dispositif de sortie (118) pour sortir l'objet introduit (160) du véhicule (110), le dispositif de transport (116) étant en outre réalisé pour transporter l'objet introduit (160) jusqu'au dispositif de sortie (118).

6. Véhicule (110) selon la revendication 5, dans lequel le dispositif de sortie (118) présente une ouverture de sortie (710) et un élément de transport pivotant pour transporter des objets (160), dans lequel l'élément de transport pivotant peut pivoter entre une première position dans laquelle l'ouverture de sortie (710) est fermée par l'élément de transport pivotant et une deuxième position dans laquelle l'ouverture de sortie (710) est ouverte.

7. Véhicule (110) selon la revendication 6, dans lequel l'élément de transport pivotant du dispositif de sortie (118) comprend un convoyeur à galets (610), un toboggan, une bande transporteuse ou une rampe.

8. Véhicule (110) selon la revendication 5, dans lequel le dispositif de sortie (118) est formé par un point de jonction avec un deuxième véhicule (110), un point d'accouplement avec un deuxième véhicule (110), une glissière coulissante, une glissière rotative, une grue, un mécanisme basculant ou un mécanisme pivotant.

9. Véhicule (110) selon l'une quelconque des revendications précédentes, dans lequel l'objet (160) est un colis, un envoi de marchandises, une lettre ou un autre véhicule (1100), et dans lequel l'autre véhicule (1100) présente un espace de réception dans lequel un colis, un envoi de marchandises ou une lettre est reçu(e).

10. Véhicule (110) selon l'une quelconque des revendications précédentes, dans lequel l'objet introduit (160) présente un code optique qui stocke l'information concernant l'objet introduit (160), et dans lequel le dispositif de détection (114) présente un capteur optique pour détecter le code optique et un processeur pour extraire du code optique détecté l'information concernant l'objet introduit (160).

11. Véhicule (110) selon l'une quelconque des revendications 1 à 9, dans lequel le dispositif de détection (114) comprend une interface de communication sans fil pour détecter un signal de communication émis par un réseau de communication sans fil et qui comprend l'information concernant l'objet introduit (160), et un processeur pour extraire du signal de communication l'information concernant l'objet introduit (160) reçu.

12. Véhicule (110) selon l'une quelconque des revendications précédentes, dans lequel l'information concernant l'objet introduit (160) comprend une adresse de livraison associée à l'objet introduit (160), une dimension géométrique de l'objet introduit (160) ou une valeur de poids de l'objet introduit (160).

13. Procédé (1400) permettant de stocker un objet (160) dans un véhicule (110), le véhicule (110) présentant un dispositif de stockage (111) pourvu d'une pluralité de positions de stockage (112) pour des objets (160), et un dispositif de transport (116) pour transporter l'objet (160) jusqu'aux positions de stockage (112), comprenant les étapes consistant à :
introduire (1410) l'objet (160) dans le véhicule (110) au moyen d'un dispositif de réception (113) du véhicule (110), dans lequel le dispositif de réception (113) présente une ouverture de réception (720) et un élément de transport pivotant pour transporter des objets (160), dans lequel l'élément de transport peut pivoter entre une première position dans laquelle l'ouverture de réception (720) est fermée par l'élément de transport pivotant et une deuxième position dans laquelle l'ouverture de réception (720) est ouverte ;
détecter (1420), par un dispositif de détection (114) du véhicule (110), une information concernant l'objet introduit (160) ;
sélectionner (1430), au moyen d'un dispositif de commande (115) du véhicule (110), une position de stockage (112) parmi la pluralité de positions de stockage (112) sur la base de l'information reçue ;
générer (1440), au moyen du dispositif de commande (115) du véhicule (110), un signal de commande qui correspond à la position de stockage sélectionnée (112) ;
émettre (1450), au moyen du dispositif de commande (115) du véhicule (110), le signal de commande généré par un réseau de communication ; et
transporter (1460), au moyen du dispositif de transport (116), l'objet introduit (160) jusqu'à la position de stockage sélectionnée (112) en réponse au signal de commande.
